# EUROPEAN PATENT APPLICATION

(11) **EP 3 611 435 A1**
(43) Date of publication of application: **19.02.2020**
(21) Application number: 19192097.4
(22) Date of filing: 16.08.2019
(51) Int. Cl.: F24D 11/02, F24D 19/10

(54) **HEATING SYSTEM**

(30) Priority: 16.08.2018 NL 2021476
(71) Applicant: Inventum Beheer B.V., 3991 CS Houten (NL)
(72) Inventor: Verbree, Richard Gerrit Jan, 3708 ZT Zeist (NL); Van Riet, Robert David, 6813 HR Arnhem (NL); Van Schieveen, Jeroen Paul, 3721 BX Bilthoven (NL)
(74) Representative: Haan, Raimond

(57) **Abstract**

The present invention relates to a heating system, comprising:
- a first water circuit that is one of a central heating water circuit and a tap water circuit;
- a second water circuit that is an other of the central heating water circuit and the tap water circuit;
- a slow heating hot water appliance that is configured to heat water of the first water circuit;
- a buffer tank, configured to store heat buffer water of the second water circuit;
- at least one heat exchanger that is connected to the first water circuit and arranged in the heat buffer water in said buffer tank;
- a fast heating hot water appliance that is a faster heating hot water appliance than the slow heating hot water appliance, wherein said fast heating hot water appliance is configured to heat the heat buffer water that is stored in said buffer tank; and
- a switching system configured to connect at least two of:
- the slow heating hot water appliance;
- the fast heating hot water appliance;
- the buffer tank; and
- a radiator of the central heating water circuit.

## Description

The present invention relates to a heating system.

Due to an ever increasing need and desire to improve the sustainability of heating systems, conventional heating systems using gas as fuel will be more and more replaced by more sustainable alternatives. Most sustainable alternatives, such as electric heaters, generate less heating power than conventional gas burning heaters. This may be a disadvantage if there is a temporary high demand for heated water. If electric energy is obtained using solar panels that convert sunlight into electricity, there may be a discrepancy in time when electric energy is won, i.e. during the day, versus when heated water is required, e.g. in the evening or early morning.

European patent application EP 2 383 523 A1 is considered the closest prior art, relative to which at least the characterizing features of the heating system according to claim 1 are novel. It discloses a communal heating plant for the production of domestic hot water and combines a main heat energy source, such as a boiler, with a secondary heat energy source that may be a renewable energy source. When solar energy is used as the secondary heat energy source, very high temperatures, even of above 100 °C, may be obtained. This high temperature of the fluid then causes fouling inside heat exchangers of the communal heating plant by depositing scale. EP 2 383 523 A1 proposes a by-pass pipe that allows to selectively by-pass the secondary heat energy source. Once fluid is directed via the by-pass pipe, the secondary heat energy production source no longer exchanges heat with a fluid flowing in a heat exchanger of the communal heating plant.

European patent application EP 2 216 609 A1 discloses a hot water supply system that comprises a slow heating hot water source, such as a heat pump, that is configured to heat water that is stored in a first tank of a hot-water supply tank unit. The hot water stored in this first tank is circulated in a heater, which is a fast heating hot water appliance. Hot water of a second tank that has been heated indirectly by the hot water stored in the first tank may be supplied to a hot-water tap.

German patent application DE 27 25 630 discloses a heating system for a pool that comprises a slow heating hot water appliance, such as biomass or solar energy, and a fast heating hot water appliance, such as a conventional gas-heater. The slow heating hot water appliance and the fast heating hot water appliance are arranged in parallel. This heating system is only capable of delivering heat on request, wherein part of the heat may be obtained via the slow heating hot water appliance that relates to a renewable energy source.

German patent application DE 28 13 620 discloses a heating system that comprises a slow heating hot water appliance, such as a solar energy source, and a fast heating hot water appliance, such as a heater. The slow heating hot water appliance and the fast heating hot water appliance share a common buffer tank. The slow heating hot water appliance is configured to heat water in a lower part of said common buffer tank, whereas the fast heating hot water appliance heats water in an upper part of said common buffer tank. By providing a tap in the lower part and a further tap in the upper part of said common buffer tank, it is possible withdraw water that has been heated by the slow heating hot water appliance first, whereas water that has been heated by the fast heating hot water appliance is also available for high demand situations. Water that has been withdrawn via both taps may possibly be mixed via a 3-way valve.

German patent application DE 30 37 446 discloses a heating system that comprises a slow heating hot water appliance, such as a solar collector or solar convector, and a fast heating hot water appliance, such as a conventional heater. Both the slow heating hot water appliance and the fast heating hot water appliance are independently connected to a buffer tank. In this way, the buffer tank may be heated via solar energy, possibly supplemented by further heating via the fast heating hot water appliance. A heat exchanger may withdraw hot water from the buffer tank or directly from the fast heating hot water appliance.

All systems above are related to one type of water circuit each, such as a central heating water circuit in EP 2 383 523 A1, DE 28 13 620 and DE 30 37 446, a heating water circuit for heating a pool in DE 27 25 630, and a tap water circuit is disclosed in EP 2 216 609 A1.

An object of the present invention is to provide a heating system, that is improved relative to the prior art and wherein at least one of the above stated problems is obviated.

Said object and/or other benefits or inventive effects, are attained according to the present disclosure by the assembly of features in the appended independent device claim 1, which is directed to a heating system, comprising:
- a first water circuit that is one of a central heating water circuit and a tap water circuit;
- a second water circuit that is an other of the central heating water circuit and the tap water circuit;
- a slow heating hot water appliance that is configured to heat water of the first water circuit;
- a buffer tank, configured to store heat buffer water of the second water circuit;
- at least one heat exchanger that is connected to the first water circuit and arranged in the heat buffer water in said buffer tank;
- a fast heating hot water appliance that is a faster heating hot water appliance than the slow heating hot water appliance, wherein said fast heating hot water appliance is configured to heat the heat buffer water that is stored in said buffer tank; and
- a switching system configured to connect at least two of:
   - the slow heating hot water appliance;
   - the fast heating hot water appliance;
   - the buffer tank; and
   - a radiator of the central heating water circuit.

The first water circuit may be a central heating water circuit, while the second water circuit is a tap water circuit. According to the invention, there is a heat exchange between the water in the first water circuit and the water in the second water circuit, i.e. between the central heating water circuit and the tap water circuit. In a buffer mode, heat may be transferred from the first water circuit to the second water circuit to buffer heat in the heat buffer water in said buffer tank. In a heating mode, heat in transferred in the opposite direction. Now water in the first water circuit may be heated in said heat exchanger by hot heat buffer water in said buffer tank.

In a buffer mode, the slow heating hot water appliance may heat the water in the first water circuit, i.e. the central heating water circuit, which may flow from said slow heating hot water appliance towards a heat exchanger that is arranged in said buffer tank. Via said heat exchanger, heat may be transferred from the heated water in the first water circuit towards heat buffer water that is stored in said buffer tank. Said heat buffer water belongs to the second water circuit, e.g. a tap water circuit. In this way, heat generated by the slow heating hot water appliance is gradually exchanged to the heat buffer water in the buffer tank. If the heat buffer water belongs to the second water circuit that is a tap water circuit, it is guaranteed that hot tap water, preferably heated by a slow heating hot water appliance in the form of a renewable energy source, is always readily available from said buffer water.

In a heating mode, water in the first water circuit may be pre-heated by the slow heating hot water appliance. If the capacity of the slow heating hot water appliance is not sufficient to heat the water to the desired temperature, it may be guided via the heat exchanger in said buffer tank, where heat may be exchanged from the heat buffer water in said buffer tank back towards the water in the first water circuit, before it is guided further towards a radiator of the central heating water circuit.

If a heating mode lasts for a longer period of time, the temperature of the heat buffer water in said buffer tank will gradually drop. In order to maintain a desired minimum temperature of the heat buffer water, a fast heating hot water appliance, such as a heater, may be activated.

The combination of a central heating water circuit, a tap water circuit, a slow heating hot water appliance, a fast heating hot water appliance and a buffer tank result in a versatile hybrid system. Hot tap water is used as heat buffer water and is also readily available to be used for heating water in the central heating water circuit.

None of the prior art documents EP 2 383 523 A1, DE 28 13 620, DE 30 37 446, DE 27 25 630 and EP 2 216 609 A1 discloses a heating system comprising a first water circuit that is one of a central heating water circuit and a tap water circuit, and a second water circuit that is the other of the central heating water circuit and the tap water circuit.

In the following description preferred embodiments of the present invention are further elucidated with reference to the drawing, in which:
Figure 1 is a schematic overview of a heating system according to the invention;
Figure 2 is a schematic overview of the heating system of Figure 1 in a buffer mode;
Figure 3 is a schematic overview of the heating system of Figure 1 in a heating mode; and
Figure 4 is a schematic overview of the heating system of Figure 1 in a maintenance mode.

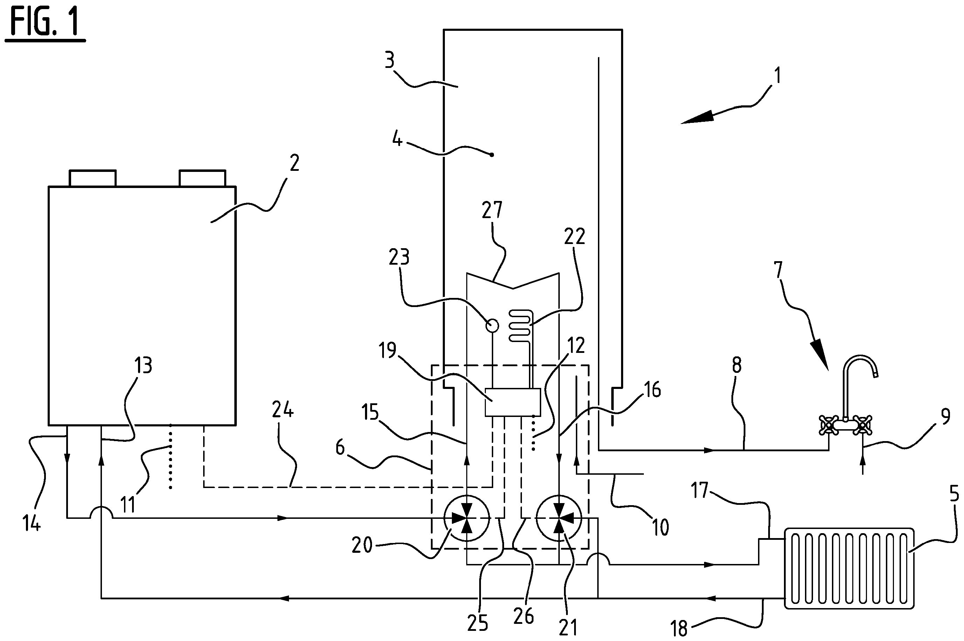

The heating system 1 according to the invention is shown in a standby mode in Figure 1. The heating system 1 comprises a slow heating hot water appliance 2 and a fast heating hot water appliance 3. The slow heating hot water appliance 2 is a slower heating hot water appliance than the fast heating hot water appliance 3, and the fast heating hot water appliance 3 is a faster heating hot water appliance than the slow heating hot water appliance 2. The fast heating hot water appliance 3 being faster "heating" means that it is capable to transfer energy to water in order to heat up the water, i.e. to increase the temperature thereof, at a faster pace than the slow heating hot water appliance 2. The heating system 1 further comprises a buffer tank 4, configured to store hot heat buffer water, and at least one further heat exchanger that is a radiator 5 of a central heating system. A switching system 6 of the heating system 1 is configured to connect at least two of:
- the slow heating hot water appliance 2;
- the fast heating hot water appliance 3;
- the buffer tank 4; and
- the at least one radiator 5 of the central heating water circuit.

Hot heat buffer water that is stored in the buffer tank 4 may be used at a (mixing) tap 7, which is connected to the buffer tank 4 via a hot water conduit 8. If tap 7 is a mixing tap 7 it may also be connected to the water mains system via a cold water conduit 9. The fast heating hot water appliance 3 is also connected to water mains system using a cold water input conduit 10.

For sake of clarity, the electricity lines 11 and 12 of respectively the slow heating hot water appliance 2 and the fast heating hot water appliance 3 are only shown in Figure 1.

The slow heating hot water appliance 2 may be a heat pump, such as a ventilation heat pump, an air source heat pump or a ground source heat pump. Such heat pumps are sustainable hot water appliances, but have a limited capacity. In combination with the buffer tank 4, it is on the one hand possible to improve the efficiency of a heat pump, i.e. the slow heating hot water appliance 2. After all, by storing heated heat buffer water in the buffer tank 4 and redirecting cooled water to a heat pump, the efficiency thereof may increase. For example, ventilation heat pumps have a higher efficiency in a lower temperature range. If the ventilation air is in the range of 18 °C - 25 °C, and the larger the temperature difference with to be heated water, the higher the efficiency is.

When a ventilation heat pump is applied as the slow heating hot water appliance 2, it may be used to actively withdraw heat from a building and store it in the buffer tank 4 for later use. In this way, a building may be actively cooled down, and the heat may be saved for later use. For example, a house may be actively cooled down when the residents have gone to sleep, and stored in the heat buffer water in said buffer tank 4 to heat the house the next morning. Offices or shops may be actively cooled down after business hours. This is especially advantageous for poorly isolated buildings that would otherwise loose the heat to the environment.

The fast heating hot water appliance 3 may comprise a heater 22 (as shown in the Figures), which preferably is an electric heater. Electricity may be obtained using renewable sources, such as solar panels and wind power.

The slow heating hot water appliance 2 comprises an input 13 and an output 14. The fast heating hot water appliance 3 comprises an input 15, and the buffer tank 4 comprises an output 16. In the shown embodiment, the fast heating hot water appliance 3 comprises or is arranged in the buffer tank 4, and consequently the output 16 of the buffer tank 4 is also the output of the fast heating hot water appliance 3. Also, the at least radiator 5 comprises an input 17 and an output 18.

The switching system 6 comprises a controller 19, configured to selectively connect at least one of:
- the output 14 of the slow heating hot water appliance 2 to at least one of the input 15 of the fast heating hot water appliance 3, the buffer tank 4, and the input 17 of the at least one heat exchanger 5; and
- the output 16 of the buffer tank 4 to at least one of the input 13 of the slow heating hot water appliance 2 and the input 17 of the at least one radiator 5.

The controller 19 is further configured to selectively close off the output 16 of the buffer tank 4.

Furthermore, the controller 19 may receive input from one or more than one sensor 23, in particular a temperature sensor. Moreover, the controller 19 may be connected to the heater 22 and the slow heating hot water appliance 2. The control connection between the controller 19 and the slow heating hot water appliance 2 is indicated with a control line 24, and may be a wired or a wireless connection. The same applies to the control lines 25 and 26 between the controller 19 and valve devices 20, 21 of switching system 6.

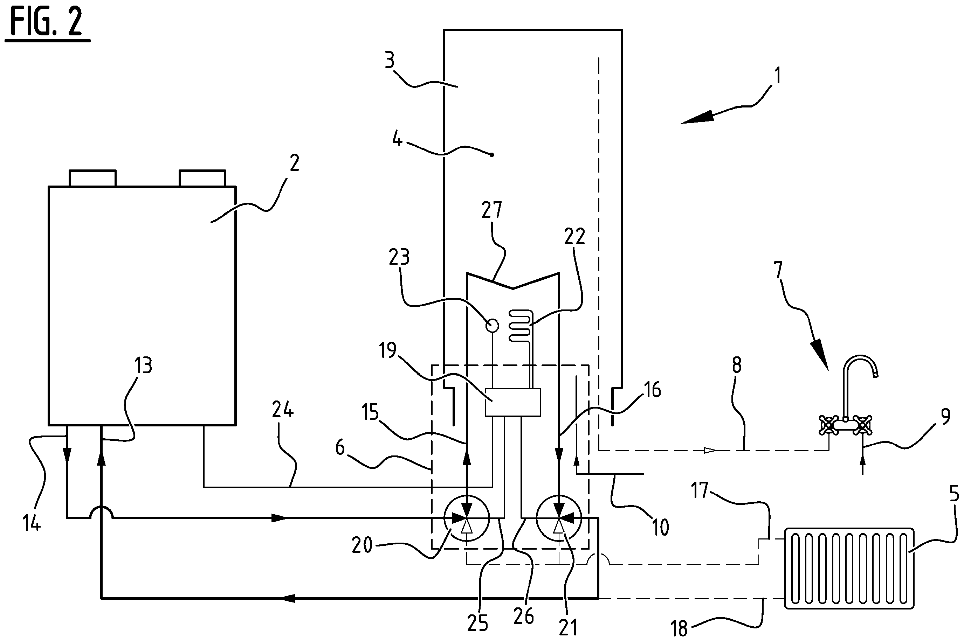

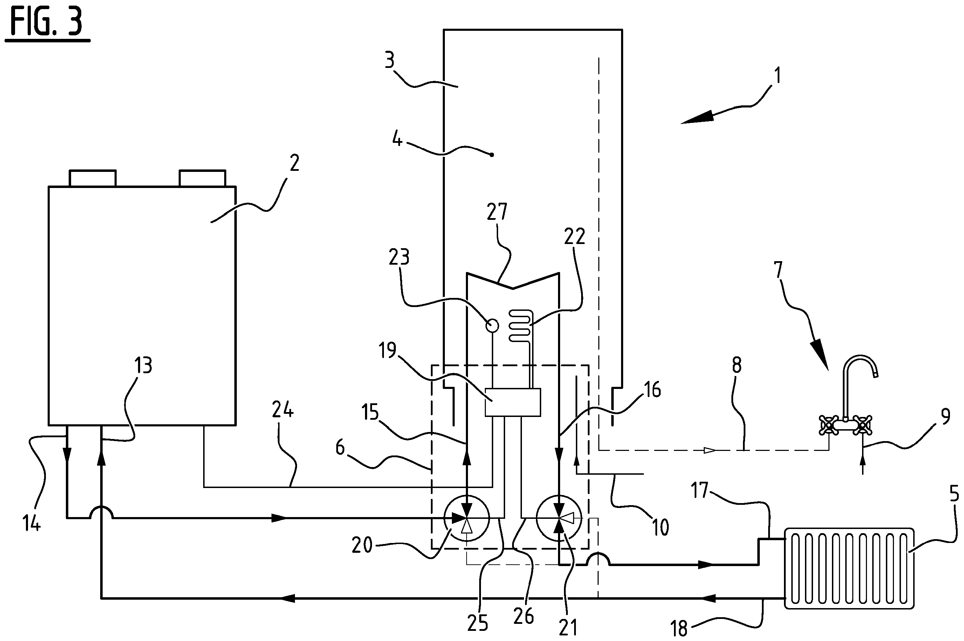

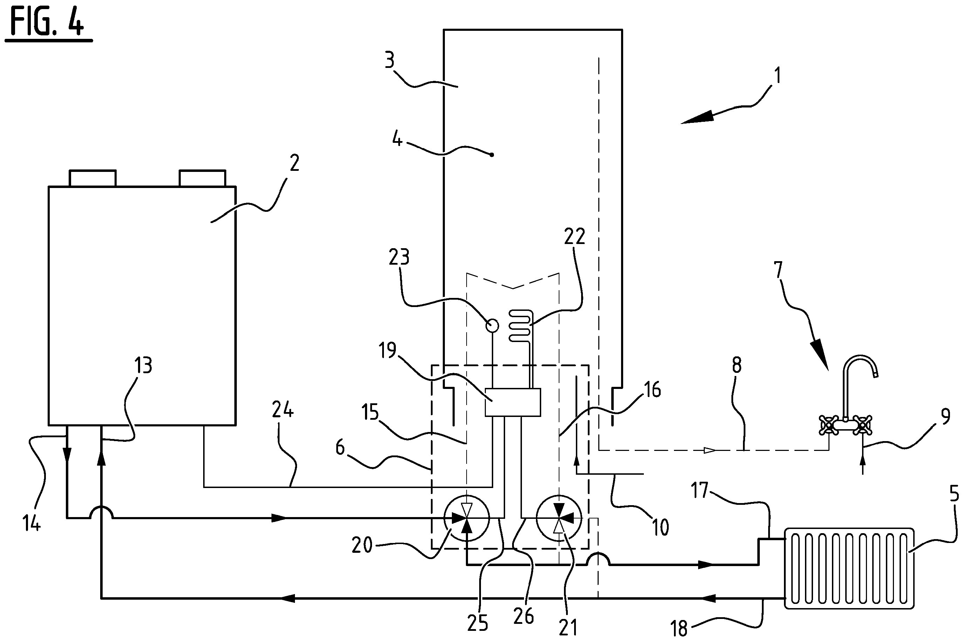

With the above options of selectively connecting or closing off, multiple modes of the heating system 1 may be activated. The heating system 1 comprises at least a buffer mode, wherein the temperature of the heat buffer water is increased and hot heat buffer water is stored in the buffer tank 4 (Figure 2), a heating mode, wherein heat of the hot heat buffer water is extracted from the buffer tank 4 (Figure 3), and a maintenance mode, wherein the at least one radiator 5 receives water that is heated by the slow heating hot water appliance 2 (Figure 4).

In the buffer mode (Figure 2), the controller 19 is configured to selectively connect the output 14 of the slow heating hot water appliance 2 to the input 15 of the fast heating hot water appliance 3 or the buffer tank 4, and the output 16 of the buffer tank 4 to the input 13 of the slow heating hot water appliance 2. In this way, the slow heating hot water appliance 2 may gradually increase the temperature of the heat buffer water that is stored inside the buffer tank 4. This may be done either via a heat exchanger 27 (as shown), or alternatively via inputting water heated by the slow heating hot water appliance 2 into the buffer tank 4 and withdrawing colder water from the buffer tank 4 to be successively heated by the slow heating hot water appliance 2. It is however explicitly mentioned that the central heating water circuit and the tap water circuit are always separate circuits, as required for health reasons. They may be divided by separate (not shown) compartments inside buffer tank 4, wherein a separation wall may act as a heat exchanger. As heat energy is stored in the buffer tank 4, water returning to the input 13 of the slow heating hot water appliance 2 will be cooled down to some extent, thereby increasing the efficiency of the slow heating hot water appliance 2.

In the heating mode (Figure 3), the controller 19 is configured to selectively connect the output 14 of the slow heating hot water appliance 2 to the input 15 of the fast heating hot water appliance 3, the output 16 of the buffer tank 4 to the input 17 of the at least one radiator 5, and the output 18 of the at least one radiator 5 to the input 13 of the slow heating hot water appliance 2. Both the slow heating hot water appliance 2 and the fast heating hot water appliance 4 are now connected in series to obtain maximum heating power. Moreover, hot water stored in the heat buffer water inside buffer tank 4 during the buffer mode, may now be used to maximize heating power. In this way, it is e.g. possible to heat a house relatively fast, for example in the early morning just before waking up. Fast heating is especially advantageous for poorly insulated buildings, as otherwise heat may already leak away and get lost during the process of heating up the building. As an example, the water leaving the at least one radiator 5 may be 30 °C. This water is heated by the slow heating hot water appliance 2 to a temperature of 35 °C. The fast heating hot water appliance 3 than further heats the water with heater 22 to a temperature of 60 °C. This hot water of 60 °C then enters the at least one radiator 5, where the temperature of the water drops again to 30 °C.

Once the building is heated to the desired temperature in the heating mode, the controller 19 may switch to a maintenance mode. In the maintenance mode (Figure 4), the controller 19 is configured to selectively connect the output 14 of the slow heating hot water appliance 2 to the input 17 of the at least one radiator 5, and the output 18 of the at least one radiator 5 to the input 13 of the slow heating hot water appliance 2. The slow heating hot water appliance 2, which may have a sufficient capacity for maintaining a desired temperature in the building, is now directly connected to the at least one radiator 5. For example, the temperature drop at the at least one radiator 5 may be about 5 °C, which may be compensated by the slow heating hot water appliance 2.

If the slow heating hot water appliance 2 has sufficient capacity, the switching system 6 may also branch of a fraction of the water leaving the slow heating hot water appliance 2 to the buffer tank 4 to simultaneously perform a buffer mode and a maintenance mode. Thus, also combinations of the described modes are possible: the controller 19 may control which ratio of water enters the fast heating hot water appliance 3 and/or the buffer tank 4, and which ratio directly continues to the at least one radiator 5.

The switching system 6 comprises a first valve device 20 and a second valve device 21, and the controller 19 is configured to control these valve devices 20, 21. The first valve device 20 is configured to connect the output 14 of the slow heating hot water appliance 2 to at least one of the input 15 of the fast heating hot water appliance 3, the buffer tank 4, and the input 17 of the at least one radiator 5. The second valve device 21 is configured to connect the output 16 of the buffer tank 4 to at least one of the input 13 of the slow heating hot water appliance 2 and the input 17 of the at least one radiator 5. At least one, and preferably both, of the first valve device 20 and the second valve device 21 may be a 3-way valve, allowing for a compact design.

The above described embodiment is intended only to illustrate the invention and not to limit in any way the scope of the invention.

For example, the buffer tank 4 is shown as an integral part of the fast heating hot water appliance 3, but may also be a separate device. Consequently, water from the slow heating hot water appliance 2 is connected to the buffer tank 4 via the fast heating hot water appliance 3. However, if the buffer tank 4 is not integrated in the fast heating hot water appliance 3, in the buffer mode, water may also flow from the slow heating hot water appliance 2 directly to the buffer tank 4. Alternatively, buffer tank 4 may comprise, in addition to the heater 22, a further (not shown) heat exchanger for actively withdrawing heat from the buffer tank 4. Such heat exchanger is preferably arranged at a higher level in the buffer tank 4 than heater 22, as heat has a tendency to rise. The skilled person will understand that, for such an alternative embodiment, a slight modification of the circuitry may result in similar functionality as described above.

It should be understood that where features mentioned in the appended claims are followed by reference signs, such signs are included solely for the purpose of enhancing the intelligibility of the claims and are in no way limiting on the scope of the claims. The scope of the invention is defined solely by the following claims.

## Claims

1. Heating system, comprising:
- a first water circuit that is one of a central heating water circuit and a tap water circuit;
- a second water circuit that is an other of the central heating water circuit and the tap water circuit;
- a slow heating hot water appliance that is configured to heat water of the first water circuit;
- a buffer tank, configured to store heat buffer water of the second water circuit;
- at least one heat exchanger that is connected to the first water circuit and arranged in the heat buffer water in said buffer tank;
- a fast heating hot water appliance that is a faster heating hot water appliance than the slow heating hot water appliance, wherein said fast heating hot water appliance is configured to heat the heat buffer water that is stored in said buffer tank; and
- a switching system configured to connect at least two of:
- the slow heating hot water appliance;
- the fast heating hot water appliance;
- the buffer tank; and
- a radiator of the central heating water circuit.

2. Heating system according to claim 1, further comprising a water tap that is in flow connection with the heat buffer water inside said buffer tank.

3. Heating system according to claim 1 or 2, wherein:
- the slow heating hot water appliance comprises an input and an output;
- the fast heating hot water appliance comprises an input;
- the buffer tank comprises an output;
- the at least one heat exchanger comprises an input and an output; and
- the switching system comprises a controller, configured to selectively connect at least one of:
- the output of the slow heating hot water appliance to at least one of the input of the fast heating hot water appliance, the buffer tank, and the input of the at least one heat exchanger; and
- the output of the buffer tank to at least one of the input of the slow heating hot water appliance and the input of the at least one heat exchanger.

4. Heating system according to claim 3, wherein the controller is further configured to selectively close off the output of the buffer tank.

5. Heating system according to claim 3 or 4, wherein the controller is configured to selectively connect, in a buffer mode:
- the output of the slow heating hot water appliance to the input of the fast heating hot water appliance or the buffer tank; and
- the output of the buffer tank to the input of the slow heating hot water appliance.

6. Heating system according to any of claims 3-5, wherein the controller is configured to selectively connect, in a heating mode:
- the output of the slow heating hot water appliance to the input of the fast heating hot water appliance;
- the output of the buffer tank to the input of the at least one heat exchanger; and
- the output of the at least one heat exchanger to the input of the slow heating hot water appliance.

7. Heating system according to any of claims 3-6, wherein the controller is configured to selectively connect, in a maintenance mode:
- the output of the slow heating hot water appliance to the input of the at least one heat exchanger; and
- the output of the at least one heat exchanger to the input of the slow heating hot water appliance.

8. Heating system according to any of claims 3-7, wherein the controller is configured to control:
- a first valve device, configured to connect the output of the slow heating hot water appliance to at least one of the input of the fast heating hot water appliance, the buffer tank, and the input of the at least one heat exchanger; and
- a second valve device, configured to connect the output of the buffer tank to at least one of the input of the slow heating hot water appliance and the input of the at least one heat exchanger.

9. Heating system according to claim 8, wherein at least one of the first valve device and the second valve device is a 3-way valve.

10. Heating system according to any of the foregoing claims, wherein the slow heating hot water appliance is a heat pump.

11. Heating system according to any of the foregoing claims, wherein the slow heating hot water appliance is at least one of a ventilation heat pump, an air source heat pump or a ground source heat pump.

12. Heating system according to any of the foregoing claims, wherein the fast heating hot water appliance comprises a heater.

13. Heating system according to any of the foregoing claims, wherein the fast heating hot water appliance comprises an electric heater.

14. Heating system according to any of the foregoing claims, wherein the fast heating hot water appliance comprises or is arranged in the buffer tank.
